# EUROPEAN PATENT APPLICATION

(11) **EP 4 749 279 A1**
(43) Date of publication of application: **27.05.2026**
(21) Application number: 25211389.9
(22) Date of filing: 27.10.2025
(51) Int. Cl.: G01N 29/24, G01N 29/28, G01N 29/04, G10K 11/02

(54) **SYSTEMS AND METHODS FOR NON-DESTRUCTIVELY INSPECTING COMPONENTS**

(30) Priority: 22.11.2024 US 202418956708
(71) Applicant: The Boeing Company, Arlington, VA 22202 (US)
(72) Inventor: Gayle, David Michael, Arlington, VA, 22202 (US)
(74) Representative: Hoffmann Eitle

(57) **Abstract**

A system and a method include a housing, an ultrasonic transducer secured within the housing, and one or more barriers secured within the housing. The one or more barriers are formed of a solid material. A liquid retention chamber is within the housing between the ultrasonic transducer and the one or more barriers. The liquid retention chamber retains a liquid.

## Description

### FIELD OF THE DISCLOSURE

Examples of the present disclosure generally relate to systems and methods for non-destructively inspecting components, and more particularly to broad band, impedance-matching hybrid delay lines for such systems and methods.

### BACKGROUND OF THE DISCLOSURE

Non-destructive inspection (NDI) is used to evaluate various components without adversely affecting such structures. For example, ultrasonic probes can be used to emit ultrasonic energy into a component. The ultrasonic energy is reflected back from various portions of the component. The emitted and reflected ultrasonic energy is analyzed to determine features and integrity of the component.

Typically, NDI probes include delay lines formed of a solid material. However, materials used for impedance matching within the NDI probes can significantly filter and attenuate higher ultrasonic frequency components. For example, a probe having increased length reduces frequency and bandwidth, which may therefore require use of a different ultrasonic transducer (in contrast to a shorter probe). Such filtering can cause issues with qualification of such NDI probes in relation to certain components, such as portions of commercial aircraft.

A known probe includes a tire formed of hard water. A transducer is disposed within the center of the probe. However, the known probe can only be rolled on surface, and may be too large to be used in certain applications.

### SUMMARY OF THE DISCLOSURE

A need exists for a system and a method that eliminate, minimize, or otherwise reduce attenuation and filtering of ultrasonic signals within an NDI probe.

With that need in mind, certain examples of the present disclosure provide a system including a housing, an ultrasonic transducer secured within the housing, and one or more barriers secured within the housing. The one or more barriers are formed of a solid material. A liquid retention chamber is within the housing between the ultrasonic transducer and the one or more barriers. The liquid retention chamber retains a liquid.

In at least one example, a delay line is defined between the one or more barriers and the liquid within liquid retention chamber.

In at least one example, the solid material is hard water, and the liquid is liquid water.

In at least one example, the housing is configured to slide over a surface of a component.

In at least one example, the one or more barriers include a dampening barrier abutting the ultrasonic transducer. As a further example, an outer wall barrier is connected to the dampening barrier. The outer wall barrier connects to internal surfaces of the housing. As a further example, a retaining barrier is connected to the outer wall barrier. The dampening barrier, the outer wall barrier, and the retaining barrier form a closed retainer that provides the liquid retention chamber.

In at least one example, the one or more barriers include a retaining barrier that retains the liquid within the liquid retention chamber. As a further example, a dampening barrier abuts the ultrasonic transducer.

The housing can also include a retaining recess at a distal end. The retaining recess is configured to retain another liquid outside of the liquid retention chamber.

The liquid retention chamber can be fully-filled with the liquid.

Certain examples of the present disclosure provide a method including emitting, by the ultrasonic transducer, ultrasonic signals into and through a delay line (as described herein) toward and into a component. Certain examples of the present disclosure provide a method for a system. The system comprises a housing, an ultrasonic transducer secured within the housing, one or more barriers secured within the housing, wherein the one or more barriers are formed of a solid material, and a liquid retention chamber within the housing between the ultrasonic transducer and the one or more barriers, wherein the liquid retention chamber retains a liquid, and wherein a delay line is defined between the one or more barriers and the liquid within liquid retention chamber. The method comprises emitting, by the ultrasonic transducer, ultrasonic signals into and through the delay line toward and into a component.

The system may be configured according to any one of the above examples.

In at least one example, the method further comprises sliding the housing over a surface of the component.

### BRIEF DESCRIPTION OF THE DRAWINGS

Figure 1 illustrates a block diagram of a system, according to an example of the present disclosure.
Figure 2 illustrates a block diagram of a system, according to an example of the present disclosure.
Figure 3 illustrates a block diagram of a system, according to an example of the present disclosure.
Figure 4 illustrates a block diagram of a system, according to an example of the present disclosure.
Figure 5 illustrates a block diagram of a system, according to an example of the present disclosure.
Figure 6 illustrates a perspective front view of an aircraft, according to an example of the present disclosure.

### DETAILED DESCRIPTION OF THE DISCLOSURE

The foregoing summary, as well as the following detailed description of certain embodiments will be better understood when read in conjunction with the appended drawings. As used herein, an element or step recited in the singular and preceded by the word "a" or "an" should be understood as not necessarily excluding the plural of the elements or steps. Further, references to "one embodiment" are not intended to be interpreted as excluding the existence of additional embodiments that also incorporate the recited features. Moreover, unless explicitly stated to the contrary, embodiments "comprising" or "having" an element or a plurality of elements having a particular condition can include additional elements not having that condition.

Examples of the present disclosure provide systems and methods that replace an interior delay line of an NDI probe with a liquid (such as water) to avoid frequency filtering due to increased delay line length, thereby providing a broad band delay line. In at least one example, the delay line includes a hybrid material including a liquid and a solid encapsulated boundary layer. The liquid provides a component that is not susceptible to shearing, and therefore allows a wide range of frequencies to pass through the material. In at least one example, the solid is hard water (a polymer) that contains the liquid within the NDI probe. The delay line of the systems and methods allow for thin film inspection of very thick composite structures, such as wings of commercial aircraft. The delay line is a path through which ultrasonic signals emitted by the ultrasonic transducer travel. In at least one example, the delay line is converted into a hybrid material of both a liquid and a solid encapsulated boundary layer to eliminate or otherwise reduce attenuation of higher frequencies.

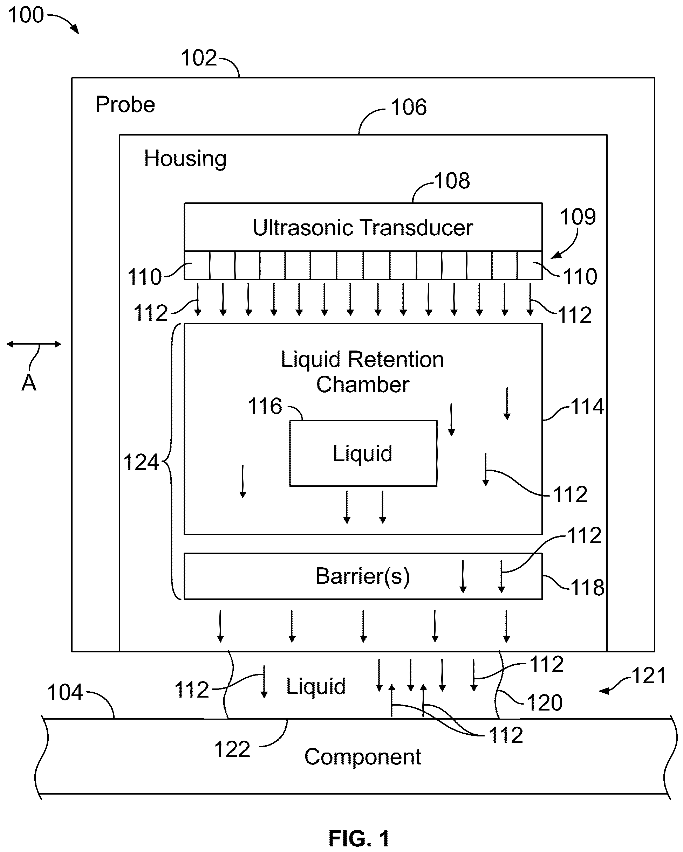

Figure 1 illustrates a block diagram of a system 100, according to an example of the present disclosure. The system 100 includes a probe 102 configured to non-destructively inspect a component 104, such as a portion of an aircraft. For example, the component 104 can be a portion of a wing, fuselage, or the like of the aircraft. The component 104 can be various other portions of structures, such as other types of vehicles, buildings, devices, and/or the like.

The probe 102 includes a housing 106 that retains an ultrasonic transducer 108, which includes an array 109 of ultrasonic elements 110 configured to emit ultrasonic signals 112, which are reflected back and received by the ultrasonic transducer 108. In at least one example, the array 109 is a linear array of the ultrasonic elements 110. As another example, the array 109 can have one or more curved portions. The array 109 can include more or fewer ultrasonic elements 110 than shown.

The housing 106 further includes a liquid retention chamber 114 that retains a liquid 116 therein. In at least one example, the liquid 116 is water in liquid form (that, is liquid water). As another example, the liquid 116 can be liquid saline. As another example, the liquid 116 can be oil.

One or more barriers 118 are disposed within the housing 106. The barrier(s) 118 retain the liquid 116 within the liquid retention chamber 114. The barrier(s) 118 are formed of a solid material, such as one or more polymers. In at least one example, the barrier(s) 118 are formed of hard water, which is a solid polymer that has the characteristics of water, but in solid form. The hard water is not ice. The hard water mimics a water column, but without the use of liquid water.

A liquid 120 is disposed between the probe 102 and a surface 122 of the component 104 being inspected. In at least one example, the liquid 120 is the same type as the liquid 116 contained within the liquid retention chamber 114. However, the liquid 120 is outside of the liquid retention chamber 114. As an example, the liquid 120 is water that is in mist form on the surface 122 of the component 104.

In operation, the probe 102 is configured to slide over the surface 122 of the component 104 in the directions of arrows A. The probe 102 can be linearly moved over the surface 122. In at least one example, the probe 102 does not include a rolling portion configured to roll over the surface 122. As such, the probe 102 can have a small form factor, and be used in non-rolling applications.

As the probe 102 slides over the surface 122 of the component 104, the ultrasonic transducer 108 emits the ultrasonic signals 112. The ultrasonic signals 112 pass through the liquid 116 within the liquid retention chamber 114, the barrier(s) 118, and the liquid 120 before passing into the component 104. The ultrasonic signals 112 reflect back to the ultrasonic transducer 108 from features of the component 104, thereby passing back through the barrier(s) 118, and the liquid 116 within the liquid retention chamber 114.

By disposing liquid water as the liquid 116 within the liquid retention chamber 114, and providing the barrier(s) 118 as solid hard water structures, the probe 102 mimics a water column without requiring a high-water flow. A delay line 124 is defined between the liquid 116 retained within the liquid retention chamber 114 and at least one the barrier(s) 118. The delay line 124 is a path through which ultrasonic signals 112 emitted by the ultrasonic transducer 108 travel.

Examples of the present disclosure provide a probe 102 that allows for an ultrasonic transducer 108 that can be standardized, and used for various different probes 102 having delay lines 124 of different lengths. Such standardization is achieved by increasing the water column, which is defined by the liquid 116 (such as water) within the liquid retention chamber 114, and at least one of the barrier(s) 118 (such as can be formed of solid hard water, and retain the liquid 116 within the liquid retention chamber 114). It has been found that the increased water column, as defined by the delay line 124, does not affect frequency or bandwidth of the ultrasonic transducer 108. As such, a length of the delay line 124 can be different for different probes 102, and not affect the frequency or bandwidth, thereby allowing use of the same, standard type of ultrasonic transducer 108 for each of the probes 102. The liquid 116 (such as liquid water) provides no shearing component, and therefore allows a wide range of frequencies to pass therethrough. The barrier(s) 118 (such as formed of solid hard water) contains the liquid 116 within the liquid retention chamber 114, and also couples to the housing 106. It has been found that the delay line 124, as described herein, allows for thin film inspection of very thick composite structures, such as wings of a commercial aircraft.

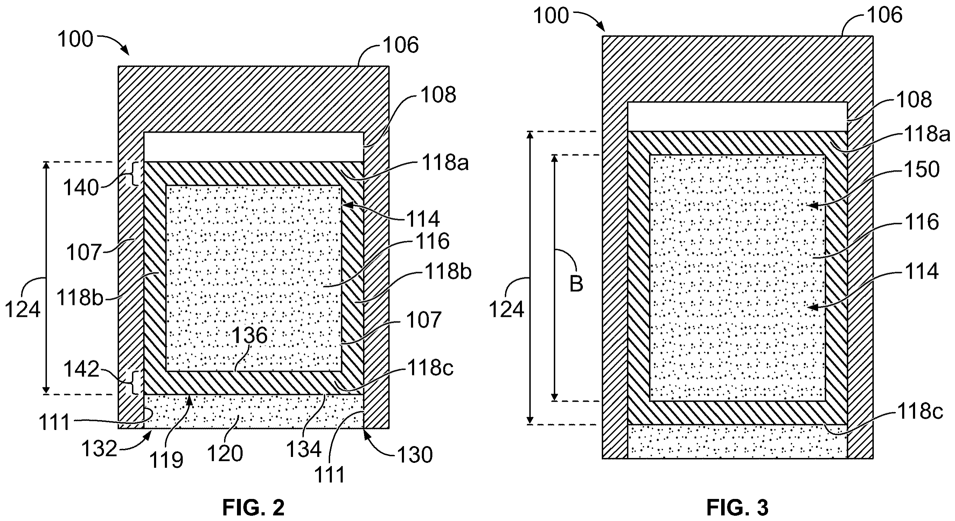

As described herein, the system 100 includes the housing 106, the ultrasonic transducer 108 secured within the housing 106, and the barrier(s) 118 secured within the housing 105. The barrier(s) 118 are formed of a solid material, such as a solid polymer (for example, hard water). The liquid retention chamber 114 is within the housing 106, between the ultrasonic transducer 108 and the barrier(s) 118. The liquid retention chamber 114 retains the liquid 116, such as liquid water. The delay line 124 is defined between at least one of the barrier(s) 118 (such as retaining barrier 118c, as shown in Figure 2, by itself, or in conjunction with a dampening barriers 118a, also shown in Figure 2) and the liquid 116 within liquid retention chamber 114.

Figure 2 illustrates a block diagram of a system 100, according to an example of the present disclosure. In at least one example, the housing 106 includes a stainless steel case. The ultrasonic transducer 108 is secured within the housing 106. A dampening barrier 118a abuts against the ultrasonic transducer 108. The dampening barrier 118a connects to an outer wall barrier 118b, which, in turn, connects to a retaining barrier 118c opposite from the dampening barrier 118a. The outer wall barrier 118b connects to internal surfaces 107 of the housing 106. The dampening barrier 118a, the outer wall barrier 118b, and the barrier 118 form a closed retainer 119, which provides the liquid retention chamber 114, and encapsulates the liquid 116 therein. The closed retainer 119, including the dampening barrier 118a, the outer wall barrier 118b, and the retaining barrier 118c are formed of a solid material, such as a polymer (for example, solid hard water).

The retaining barrier 118c is distally located away from the ultrasonic transducer 108. The retaining barrier 118c does not contact the ultrasonic transducer 108. The retaining barrier 118c ensures that the liquid 116 is retained within the liquid retention chamber 114. In particular, the retaining barrier 118c provides a membrane that prevents the liquid 116 from escaping from the liquid retention chamber 114.

Optionally, the system 100 may not include the outer wall barrier 118b. Instead, the dampening barrier 118a and the barrier 118 may be directly and sealingly coupled to the internal surfaces 107 of the housing 106, thereby defining the liquid retention chamber 114 therebetween.

The housing 106 can also include a retaining recess 130 at a distal end 132. The retaining recess 130 is defined between an outer surface 134 of the retaining barrier 118c and distal internal surfaces 111 of the housing 106. The outer surface 134 is opposite from an internal surface 136, which provides an end of the liquid retention chamber 114. The retaining recess 130 is configured to retain at least a portion of the liquid 120, which provides an interface 121 between the probe 102 and the surface 122 of the component 104 (shown in Figure 1). Optionally, the housing 106 may not include the retaining recess 130.

As shown in Figure 2, the delay line 124 is defined by the dampening barrier 118a, the liquid 116 within the liquid retention chamber 114, and the retaining barrier 118c. In at least one example, the liquid retention chamber 114 is devoid of air or other gases. In at least one example, the liquid retention chamber 114 is fully-filled with the liquid 116, such that the liquid 116 contacts the dampening barrier 118a and the retaining barrier 118c (as well as the outer wall barrier 118b). Alternatively, the liquid retention chamber 114 may not be fully-filled with the liquid 116.

The dampening barrier 118a includes a thickness 140, which is selected to provide a desired dampening in relation to the ultrasonic transducer 108. The dampening barrier 118a directly abuts the ultrasonic transducer 108, and thereby dampens motion (such as resonance, vibratory motion, and/or the like) of the ultrasonic transducer 108 during operation. As an example, the dampening barrier 118a can have a thickness 140 between 1-2 inches. As a further example, the thickness 140 can be 1.25 inches. Optionally, the thickness 140 can be less than 1 inch, or greater than 2 inches. A thickness 142 of the retaining barrier 118c can be the same as the thickness 140 (as well as a thickness of the outer wall barrier 118b).

Figure 3 illustrates a block diagram of a system 100, according to an example of the present disclosure. The system 100 is similar to the system 100 shown in Figure 2, except that the delay line 124 has a length that is increased (or optionally decreased) in the directions of arrows B. The same ultrasonic transducer 108 can be used with the system 100, despite the different length of the delay line 124, because the increased length of the water column 150 within the liquid retention chamber 114 does not affect frequency or bandwidth of the ultrasonic transducer 108.

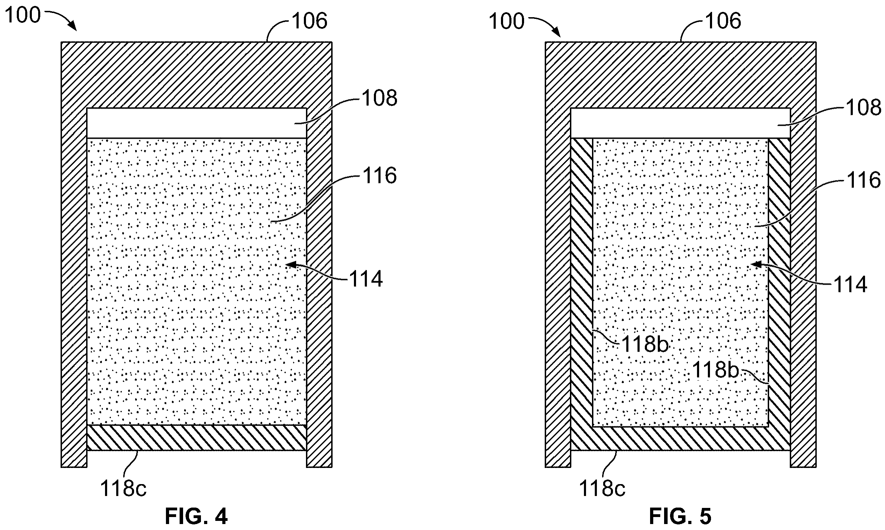

Figure 4 illustrates a block diagram of a system 100, according to an example of the present disclosure. In this example, the system 100 includes the retaining barrier 118c (but not the dampening barrier 118a, nor the outer wall barrier 118b, which are shown in Figure 2). Accordingly, the liquid retention chamber 114 is defined between the ultrasonic transducer 108, the internal surfaces 107 of the housing 106, and the retaining barrier 118c.

Figure 5 illustrates a block diagram of a system 100, according to an example of the present disclosure. In this example, the system 100 includes the outer wall retaining barriers 118c and the retaining barrier 118c (but not the dampening barrier 118a, which is shown in Figure 2). As such, the liquid retention chamber 114 is defined between the ultrasonic transducer 108, the outer wall barrier 118b, and the retaining barrier 118c.

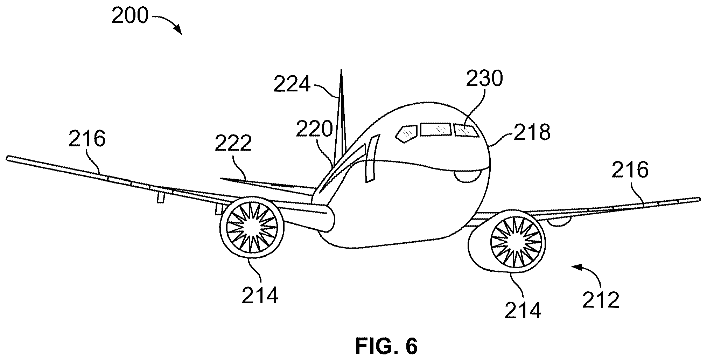

Figure 6 illustrates a perspective front view of an aircraft 200, according to an example of the present disclosure. The aircraft 200 includes a propulsion system 212 that includes engines 214, for example. Optionally, the propulsion system 212 may include more engines 214 than shown. The engines 214 are carried by wings 216 of the aircraft 200. In other examples, the engines 214 may be carried by a fuselage 218 and/or an empennage 220. The empennage 220 may also support horizontal stabilizers 222 and a vertical stabilizer 224.

The fuselage 218 of the aircraft 200 defines an internal cabin 230, which includes a flight deck or cockpit, one or more work sections (for example, galleys, personnel carry-on baggage areas, and the like), one or more passenger sections (for example, first class, business class, and coach sections), one or more lavatories, and/or the like.

Referring to Figures 1-6, the systems 100 described herein can be used to non-destructively inspect various portions of the aircraft 200, such as the wings 216, the fuselage 218, walls within the internal cabin 230, and the like.

Further, the disclosure includes examples according to the following clauses:
Clause 1. A system comprising:
   a housing;
   an ultrasonic transducer secured within the housing;
   one or more barriers secured within the housing, wherein the one or more barriers are formed of a solid material; and
   a liquid retention chamber within the housing between the ultrasonic transducer and the one or more barriers, wherein the liquid retention chamber retains a liquid.
Clause 2. The system of Clause 1, wherein a delay line is defined between the one or more barriers and the liquid within liquid retention chamber.
Clause 3. The system of Clauses 1 or 2, wherein the solid material is hard water, and wherein the liquid is liquid water.
Clause 4. The system of any of Clauses 1-3, wherein the housing is configured to slide over a surface of a component.
Clause 5. The system of any of Clauses 1-4, wherein the one or more barriers comprise a dampening barrier abutting the ultrasonic transducer.
Clause 6. The system of Clause 5, wherein the one or more barriers further comprise an outer wall barrier connected to the dampening barrier, wherein the outer wall barrier connects to internal surfaces of the housing.
Clause 7. The system of Clause 6, wherein the one or more barriers further comprise a retaining barrier connected to the outer wall barrier, wherein the dampening barrier, the outer wall barrier, and the retaining barrier form a closed retainer that provides the liquid retention chamber.
Clause 8. The system of any of Clauses 1-4, wherein the one or more barriers comprise a retaining barrier that retains the liquid within the liquid retention chamber.
Clause 9. The system of Clause 8, wherein the one or more barriers further comprise a dampening barrier abutting the ultrasonic transducer.
Clause 10. The system of any of Clauses 1-9, wherein the housing comprises a retaining recess at a distal end, wherein the retaining recess is configured to retain another liquid outside of the liquid retention chamber.
Clause 11. The system of any of Clauses 1-10, wherein the liquid retention chamber is fully-filled with the liquid.
Clause 12. A method for a system comprising:
   a housing;
   an ultrasonic transducer secured within the housing;
   one or more barriers secured within the housing, wherein the one or more barriers are formed of a solid material; and
   a liquid retention chamber within the housing between the ultrasonic transducer and the one or more barriers, wherein the liquid retention chamber retains a liquid, and wherein a delay line is defined between the one or more barriers and the liquid within liquid retention chamber,
   the method comprising:
      emitting, by the ultrasonic transducer, ultrasonic signals into and through the delay line toward and into a component.
Clause 13. The method of Clause 12, wherein the solid material is hard water.
Clause 14. The method of Clauses 12 or 13, wherein the liquid is liquid water.
Clause 15. The method of any of Clauses 12-14, further comprising sliding the housing over a surface of the component.
Clause 16. A system comprising:
   a housing configured to slide over a surface of a component;
   an ultrasonic transducer secured within the housing;
   one or more barriers secured within the housing, wherein the one or more barriers are formed of hard water; and
   a liquid retention chamber within the housing between the ultrasonic transducer and the one or more barriers, wherein the liquid retention chamber retains liquid water, and wherein a delay line is defined between the one or more barriers and the liquid water within liquid retention chamber.
Clause 17. The system of Clause 16, wherein the one or more barriers comprise a retaining barrier that retains the liquid within the liquid retention chamber.
Clause 18. The system of Clause 17, wherein the one or more barriers further comprise a dampening barrier abutting the ultrasonic transducer.
Clause 19. The system of any of Clauses 16-18, wherein the housing comprises a retaining recess at a distal end, wherein the retaining recess is configured to retain another liquid outside of the liquid retention chamber.
Clause 20. The system of any of Clauses 16-19, wherein the liquid retention chamber is fully-filled with the liquid.

As described herein, examples of the present disclosure provide systems and methods that eliminate, minimize, or otherwise reduce attenuation and filtering of ultrasonic signals within an NDI probe, such as during NDI inspection of portions of aircraft.

While various spatial and directional terms, such as top, bottom, lower, mid, lateral, horizontal, vertical, front and the like can be used to describe embodiments of the present disclosure, it is understood that such terms are merely used with respect to the orientations shown in the drawings. The orientations can be inverted, rotated, or otherwise changed, such that an upper portion is a lower portion, and vice versa, horizontal becomes vertical, and the like.

As used herein, a structure, limitation, or element that is "configured to" perform a task or operation is particularly structurally formed, constructed, or adapted in a manner corresponding to the task or operation. For purposes of clarity and the avoidance of doubt, an object that is merely capable of being modified to perform the task or operation is not "configured to" perform the task or operation as used herein.

It is to be understood that the above description is intended to be illustrative, and not restrictive. For example, the above-described embodiments (and/or aspects thereof) can be used in combination with each other. In addition, many modifications can be made to adapt a particular situation or material to the teachings of the various embodiments of the disclosure without departing from their scope. While the dimensions and types of materials described herein are intended to define the parameters of the various embodiments of the disclosure, the embodiments are by no means limiting and are exemplary embodiments. Many other embodiments will be apparent to those of skill in the art upon reviewing the above description. The scope of the various embodiments of the disclosure should, therefore, be determined with reference to the appended claims, along with the full scope of equivalents to which such claims are entitled. In the appended claims and the detailed description herein, the terms "including" and "in which" are used as the plain-English equivalents of the respective terms "comprising" and "wherein." Moreover, the terms "first," "second," and "third," etc. are used merely as labels, and are not intended to impose numerical requirements on their objects. Further, the limitations of the following claims are not written in means-plus-function format and are not intended to be interpreted based on 35 U.S.C. § 112(f), unless and until such claim limitations expressly use the phrase "means for" followed by a statement of function void of further structure.

This written description uses examples to disclose the various embodiments of the disclosure, including the best mode, and also to enable any person skilled in the art to practice the various embodiments of the disclosure, including making and using any devices or systems and performing any incorporated methods. The patentable scope of the various embodiments of the disclosure is defined by the claims, and can include other examples that occur to those skilled in the art. Such other examples are intended to be within the scope of the claims if the examples have structural elements that do not differ from the literal language of the claims, or if the examples include equivalent structural elements with insubstantial differences from the literal language of the claims.

## Claims

1. A system (100) comprising:
a housing (106);
an ultrasonic transducer (108) secured within the housing (106);
one or more barriers (118) secured within the housing (106), wherein the one or more barriers (118) are formed of a solid material; and
a liquid retention chamber (114) within the housing (106) between the ultrasonic transducer (108) and the one or more barriers (118), wherein the liquid retention chamber (114) retains a liquid (116).

2. The system (100) of claim 1, wherein a delay line (124) is defined between the one or more barriers (118) and the liquid (116) within liquid retention chamber (114).

3. The system (100) of claim 1 or 2, wherein the solid material is hard water, and wherein the liquid (116) is liquid water.

4. The system (100) of any one of claims 1 to 3, wherein the housing (106) is configured to slide over a surface (122) of a component (104).

5. The system (100) of any one of claims 1 to 4, wherein the one or more barriers (118) comprise a dampening barrier (118a) abutting the ultrasonic transducer (108).

6. The system (100) of claim 5, wherein the one or more barriers (118) further comprise an outer wall barrier (118b) connected to the dampening barrier (118a), wherein the outer wall barrier (118b) connects to internal surfaces (122) of the housing (106).

7. The system (100) of claim 6, wherein the one or more barriers (118) further comprise a retaining barrier (118c) connected to the outer wall barrier (118b), wherein the dampening barrier (118a), the outer wall barrier (118b), and the retaining barrier (118c) form a closed retainer that provides the liquid retention chamber (114).

8. The system (100) of any one of claims 1 to 4, wherein the one or more barriers (118) comprise a retaining barrier (118c) that retains the liquid (116) within the liquid retention chamber (114).

9. The system (100) of claim 8, wherein the one or more barriers (118) further comprise a dampening barrier (118a) abutting the ultrasonic transducer (108).

10. The system (100) of any one of claims 1 to 9, wherein the housing (106) comprises a retaining recess (130) at a distal end, wherein the retaining recess (130) is configured to retain another liquid (116) outside of the liquid retention chamber (114).

11. The system (100) of any one of claims 1 to 10, wherein the liquid retention chamber (114) is fully-filled with the liquid (116).

12. A method for a system (100) comprising:
a housing (106);
an ultrasonic transducer (108) secured within the housing (106);
one or more barriers (118) secured within the housing (106), wherein the one or more barriers (118) are formed of a solid material; and
a liquid retention chamber (114) within the housing (106) between the ultrasonic transducer (108) and the one or more barriers (118), wherein the liquid retention chamber (114) retains a liquid (116), and wherein a delay line (124) is defined between the one or more barriers (118) and the liquid (116) within liquid retention chamber (114),
the method comprising:
emitting, by the ultrasonic transducer (108), ultrasonic signals (112) into and through the delay line (124) toward and into a component (104).

13. The method of claim 12, wherein the solid material is hard water.

14. The method of claim 12 or 13, wherein the liquid (116) is liquid water.

15. The method of any one of claims 12 to 14, further comprising sliding the housing (106) over a surface (122) of the component (104).
